# EUROPEAN PATENT APPLICATION

(11) **EP 2 879 030 A1**
(43) Date of publication of application: **03.06.2015**
(21) Application number: 13306650.6
(22) Date of filing: 02.12.2013
(51) Int. Cl.: G06F 3/044, H04B 5/00

(54) **Capacitive touch screen emulator**

(71) Applicant: Gemalto SA, 92190 Meudon (FR)
(72) Inventor: Touvet, Stéphane, 92190 Meudon (FR)
(74) Representative: Cour, Pierre

(57) **Abstract**

The invention relates to an electronic capacitive touch screen emulator that comprises a conductive plate being intended to be in contact or very close to a capacitive touch detection device. The conductive plate is connected to an commutative unit that comprises at least a diode. The modification of impedance provided by the commutative unit when it is switched on changes the electric field around the conductive plate and thus provides the emulation of the presence of a human fingertip.

## Description

The invention relates to the field of touch screen devices. The invention concerns more particularly devices allowing the establishment of a communication with a device having a capacitive touch screen. The invention relates to a capacitive touch screen emulator.

One issue of the market of computers, mobile devices is the lack of convergence between constructors regarding one standard and interoperable connection for data exchange. Indeed, many mobile devices, as iPhone, Android based phones, Blackberry, have evolved without much convergence. One alternative is to use contactless communication instead of hardwired connector. One such possibility is using the Bluetooth technology which is present on every tablet and smartphone. However, one drawback of this solution is that all devices do not support the same range of profile. For instance, Android platform supports Bluetooth Serial Port Profile, but iPhone does not.

In order to overcome the lack of convergence between mobile devices, there is a need for establishing communications with touch screen devices by using the touch screen. This is the aim of what is called touch screen communication: to allow the establishment of a communication between a touch screen and an object next to or on the touch screen. Indeed, the touch screen is the only universal interface existing within touch screen devices. The touch screen interface of a mobile device allows a two way communication between the touch screen mobile device and a user:
- a tactile touch in the user to device way; and
- a light beam or an image display, for example, in the device to user way.

Touch screen devices are more and more used and it is becoming the primary way for users to interact with mobile devices or computers. A touch screen is an electronic visual display that can detect the presence and location of a touch within the display area. Currently touch screen utilizes two main technologies:
- the resistive touch screen technology. A resistive touch screen display is composed of two main layers, which are two thin, metallic, electrically conductive layers separated by a narrow gap. When a fingertip presses down on a point of the display, the two metallic layers become connected at that point and the display acts as a pair of voltage divider with connected outputs. As a result, this implies a change in the electrical current which is registered as a touch event and sent to the controller for processing; and
- the capacitive touch screen technology. A capacitive touch screen display consists of an insulator, coated with a transparent conductor. As the human body is a conductor, when a user touches the surface of the screen with a part of his body, this results in a distortion of the body's electrostatic field which in term is measurable as a change in electrical impedance.

The invention relates more particularly to the capacitive touch screen technology, this technology being currently the most widespread technology among touch screen devices. As this technology is largely implemented, this can be used as a channel for transferring data by a touch emulation mechanism. There are currently several ways used to emulate a touch for a capacitive touch screen among which:
- system where the touch is emulated by the movement of a mechanical part of the system, as described in the patent application US2011/0199325. The main drawback of this kind of system is its fragility, its over-all dimensions, its cost.
- system where a small conductive surface is placed on the screen, said system being driven by a reed or mechanical relay. The marketed Crayola from Colorstudio HD, for example, uses such an approach. The main drawback of this kind of system is their high energy consumption because of the strong magnetic field needed to move the blade of the relay. Moreover the transmission speed is limited due to the mechanical movement and it is likely to be short-lived because of the steering of blades and/or a mechanical spring. Moreover, this kind of system presents a high overall dimension.

- system where a small conductive surface is placed on the screen, said system being driven by an electronic relay. The main drawback of this kind of system is its very expensive cost. Indeed, because of the extremely low variation of impedance induced by the touch of a fingertip on a capacitive touch screen and of the highest parasitic capacitance of such an electronic relay, whether the touch of such a system is not detected by a capacitive touch screen sized for the touch of a human fingertip or there is need to use extremely expensive electronic relay having a very low parasitic capacitance.
- system where a small conductive surface is placed on the screen and where a specific pulses signal is sent through the system. However this technology is not very reliable and not compatible with main of the capacitive touch screen of the market and requires complex electronic.

It is an object of the invention to provide a capacitive touch screen emulator inexpensive, easy to implement, reliable.

To this end, the invention provides a capacitive touch screen emulator comprising a conductive plate, said conductive plate being intended for contact with a touch detection device, said conductive plate being connected to a commutative unit comprising at least a diode, said capacitive touch screen emulator comprising a first ground plane, an impedance being connected between the conductive plate and the first ground plane, said impedance varying by means of the commutative unit, said conductive plate being electrically insulated from the first ground plane This conductive plate modifies the local electrical field depending of the state of a commutative unit, said commutative unit comprising at least one diode.

The conductive plate is intended to be in contact, or very close, to a touch detection device, e.g. a capacitive touch screen of a device, such as a smartphone or a tablet. The touch detection device detects the change of the electric field due to the modification of impedance provided by a commutative unit on diode-based, and thus the emulation of presence of a human fingertip. This capacitive touch screen emulator is simple to implement, does not rely on expensive electronic components and is reliable. The transmission rate of information from the capacitive touch screen emulator to a capacitive touch screen is not limited because of the emulator but because of the capacitive touch screen and of its time of response to a touch. This capacitive touch screen emulator's time of response is not limited unlike mechanical devices which are limited because of the mechanical movement of the blades.

Diode of the commutative unit requires low bias polarization, thus this capacitive touch screen emulator could be advantageously implemented into a low power autonomous object with a battery for example.

The conductive plate could be a metallic surface, a surface comprising a conductive ink or a sufficiently carbon loaded ink or any insulate surface coated with conductive material. It is not necessary for the conductive surface to touch the capacitive touch screen to allow the transfer of load. It could work when the conductive surface is hundreds of microns from capacitive touch screen with in-between a dielectric as plastic film for example. Indeed on capacitive touch screens, there is generally a transparent glass panel for protection. The capacitive touch screen emulator could be thus integrated into a smart card and the fact of putting the smart card on the touch screen could allow the emulation to work.

According to not limited embodiments, the capacitive touch screen emulator can comprise one or more of the following additional characteristics:
- the commutative unit drives two different states of the impedance:
   - a first OFF state wherein the impedance is higher than a first predetermined threshold;
   - a second ON state wherein the impedance is lower than a second predetermined threshold.;

The first predetermined threshold should be preferably as high as possible and the second predetermined threshold should be as lower as possible. The first predetermined threshold and the second predetermined threshold have to be chosen in order to be compatible with as many capacitive touch screen of the market as possible. When the commutative unit is in ON state, and when the capacitive touch screen emulator is in contact with a capacitive touch screen, or sufficiently close enough to the capacitive touch screen to be detected, the transfer of capacitive load from the capacitive touch screen to the capacitive touch screen emulator is possible, thus the capacitive touch screen could detect the presence of the capacitive touch screen emulator. When the commutative unit is in OFF state, the capacitive touch screen do not detect the presence of the capacitive touch screen emulator.
- the commutative unit forms a first branch of an electrical circuit, said first branch comprising a first node and a second node and, said commutative unit having two different states:
- a forward bias state wherein current flows through said first branch; and
- a reverse bias state wherein current is blocked through said first branch;
the switching of the impedance between the ON state and the OFF state being driven by the switching of the commutative unit between the forward bias state and the reverse bias state. It is possible to change positive logic by negative logic just by reversing the direction of the diode of the commutative unit.
- the commutative unit comprises four diodes, two diodes of said four diodes being connected in series between the first node of the first branch and a third node of the first branch of the electrical circuit; the two other diodes of said four diodes being connected in series between the second node and the third node; the third node being connected to the conductive plate. Thus, when the commutative unit is in the reverse bias state, the third node is floating and negligible transfer of load is possible between a touch detection device and the capacitive touch screen emulator. Thus the capacitive touch screen emulator is not detected by the touch detection device. The conductive surface of the emulator unit retrieves a signal from the touch-screen device of a few hundred of millivolts. Thus, there is always a variation that could modify the reverse bias of diode. If so, said diode could switch between reverse bias and forward bias in an undesired way, meaning the communication between the touch-screen device and the capacitive touch screen emulator is not desired. In order to avoid that, diode with a highest threshold voltage is needed in order to avoid undesired switch of diode. Another solution is to provide the commutative unit with a plurality of diodes in order to raise the threshold of the commutative unit for switching between forward bias and reverse bias in order to get rid of the stray voltage at the junction that are brought by the touch-screen device;
- a first decoupling capacitor is connected between the first node and the second node and a second decoupling capacitor is connected between the first node and the first ground plane of the capacitive touch screen emulator. The first and the second decoupling capacitor are defined so that their effects are of negligible quantitative importance in relation to the maximum frequency of a signal used to command the commutative unit of the capacitive touch screen emulator. They may already exist in a parasite way;
- the capacitive touch screen emulator comprises a command unit for generating a command signal, said command signal being adapted to drive the switching of the commutative unit between the forward bias state and the reverse bias state;
- the command unit comprises a microcontroller, said microcontroller being able to generate at least a data bit stream, each bit of said data bit stream corresponding whether to the forward bias state or to the reverse bias state of the commutative unit. The use of a microcontroller allows transmitting in an automatic way information coded into a data bit stream from the capacitive touch screen emulator to a capacitive touch screen device. The information could be a one-time password code (OTP). Thus, it would allow a user to authenticate himself to a touch-screen device without typing the OTP code ;
- the capacitive touch screen emulator comprises a first inverter, the input of said first inverter being linked to the command unit and the output of said first inverter being linked to the first node of the first branch;
- the capacitive touch screen emulator comprises a second inverter, the input of the second inverter being connected to the output of the first inverter, the output of the second inverter being connected to the second node of the first branch of the electrical circuit. The first inverter allows to being certain of having clean logical signal to command the switching of the commutative unit and thus a correct forward or reverse bias for diodes. A franc switching of the diode is needed in order to avoid an analog behavior at the touch emulation level. Inverter may have hysteresis for improving commutation. The second inverter is used for generating positive or negative voltage through the diodes with a single power supply;
- the capacitive touch screen emulator comprises a limiting current unit in series with the commutative unit for limiting the current flowing through the diodes. The limiting current could comprise an electrical resistance defined so that diodes are in forward bias with minimum of current for reducing energy consumption.

The invention also provides a device comprising:
- the capacitive touch screen emulator according to any one of the previous embodiments and;
- a casing comprising an electrical ground;
   the electrical ground of the casing being coupled with the first ground plane of the capacitive touch screen emulator.

The casing of the device could comprise at least a conductive part, said conductive part being located on an external surface of the casing. If the casing of the device has external conductive part, this area will be preferably located so that when user holds the device, it makes contact with the hand body. This conductive area shall be as far away from touch screen area in order to avoid any undesired touch detection. As the touch screen device works with very small capacitance variation, an enough big ground plane without external connection could be sufficient due to plane capacity, intrinsic capacity and antenna effect coupling of its ground plane.

The device could comprise connecting means of the ground plane of the capacitive touch screen emulator to a touch detection device intended to be in touch with the conductive surface of the capacitive touch screen emulator. If there is a negligible coupling between device and the second device, a transfer of load between the device and the touch screen device may be insufficient for touch emulation. Connecting means could be a human body, the user holding the second device, for example a mobile device, in his left hand and holding the device, for example a stylus, in his right hand. The body being a natural conductor, and the user being on the ground there will be a coupling.

Some embodiments of the emulator and device in accordance with embodiments of the present invention are now described, by way of example only, and with reference to the accompanying drawing, in which:
- Figure 1 schematically illustrates the electronic diagram of a capacitive touch screen emulator according to an embodiment of the invention;
- Figure 2 schematically illustrates the detail of a ground case connection of capacitive touch screen emulator according to an embodiment of the invention.

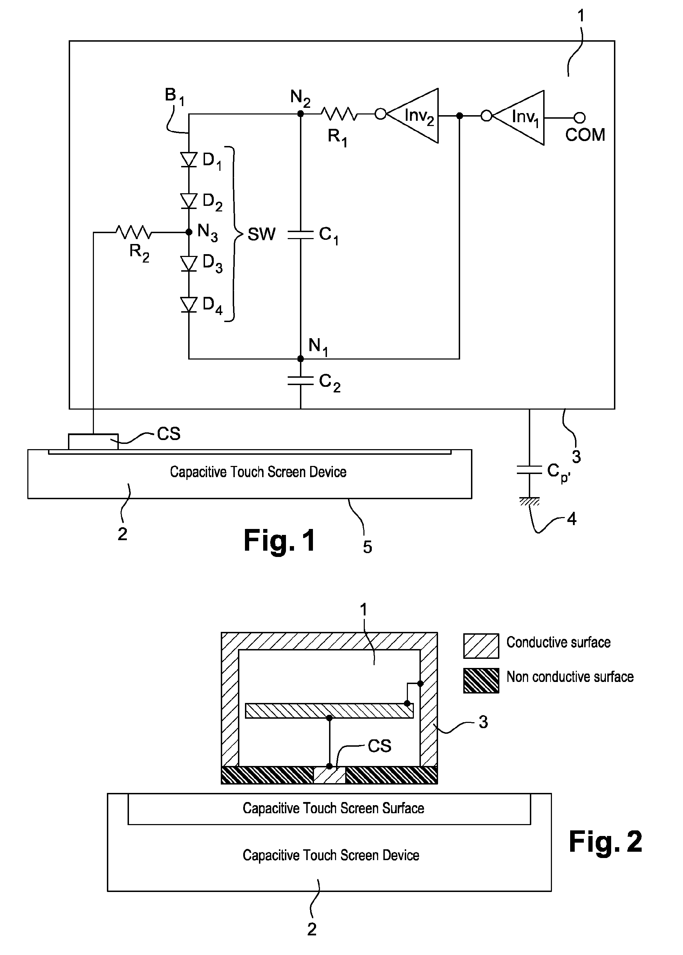

Referring now to the drawing, Figure 1 illustrates a capacitive touch screen emulator 1 comprising a commutative unit SW forming a first branch B1 of an electrical circuit. The first branch B1 comprises a first node N1 and a second node N2. The commutative unit comprises, in this embodiment, four diodes (D1, D2, D3, D4). Two diodes (D1, D2) of said four diodes are connected in series between the second node N2 and a third node N3. Two other diodes (D3, D4) of said four diodes are connected in series between the third node N3 and the first node N1. The capacitive touch screen emulator 1 comprises a conductive plate CS intended to be in contact, or very close to, the touch detection device 2, which is a capacitive touch screen device in this embodiment. The capacitive touch screen emulator 1 comprises a first ground plane 3. Between the first node N1 and the second node N2 is connected a first decoupling capacitor C1. Between the first node N1 and the first ground plane 3 of the emulator 1 is connected a second decoupling capacitor C2. The capacitive touch screen emulator 1 comprises a command unit COM for generating a command signal. A first inverter INV1 and a second inverter INV2 are represented. The input of the first inverter INV1 is connected to the command unit COM and the output of the first inverter INV1 is connected to the first node N1 of the first branch B1 and to the input of the second inverter INV2. The input of the second inverter INV2 is connected to the output of the first inverter INV1 and the output of the second inverter INV2 is connected to the second node N2 of the first branch B1 through a limiting current unit R1. The limiting current unit R1 is a resistance connected in series with the commutative unit SW for limiting the current flowing through the four diodes (D1, D2, D3, D4) of the commutative unit SW. The capacitive touch screen emulator 1 also comprises a second resistance R2 connected between the third node N3 of the first branch B1 and the conductive plate CS in order to protect the emulator against electrostatic discharges when the conductive plate CS is put in contact with the touch detection device 2. A stray capacitance Cp' is represented on figure 1 between the ground plane of the touch-screen emulator 1 and the ground 4.

In this embodiment, the commutative unit SW comprises four diodes (D1, D2, D3 and D4). The commutative unit SW has two different states: a forward bias state and a reverse bias state. The first state of the commutative unit SW is a forward bias state. It corresponds to a state in which the four diodes (D1, D2, D3 and D4) of the commutative unit are in forward bias, thus current can flow through the first branch B1 formed by the commutative unit SW. The second state of the commutative unit SW is a reverse bias state. It corresponds to a state in which the four diodes (D1, D2, D3 and D4) of the commutative unit are in reverse bias, thus current cannot flow through the first branch B1 and is blocked through said first branch B1. In this embodiment, the first branch B1 has three nodes (N1, N2 and N3). Two diodes (D1, D2) are between the third node N3 and the second node N2. The two other diodes (D3, D4) are between the first node N1 and the third node N3.

The conductive plate CS is connected to the third node N3 through the resistance R2. The presence of this electrical resistance R2 is facultative; its role is to protect the rest of the electrical circuit against electrostatic discharges. The value of the electrical resistance is chosen so that it introduces negligible voltage drop across the resistance. When interacting with the capacitive touch screen device 2, it is the conductive plate CS which is in contact with the touch screen device.

The command unit COM is able to generate a command signal comprising a HIGH state signal, corresponding in this embodiment to a logical 1 and a LOW state signal, corresponding in this embodiment to a logical 0. The inversion of these logical states is possible. The command unit could comprise a microcontroller, said microcontroller generating a set of data bit stream, composed of 0 and 1. The capacitive touch screen emulator is at the OSI physical layer.

If the command signal is a 1, then the output of the first inverter INV1 is a 0. As the input of the second inverter INV2 is linked to the output of the first inverter INV1, the output of the second inverter INV2 is then a 1. Thus, the diodes are in forward bias and current can flow through the first branch B1 and the commutative unit SW is in the forward bias state. When the commutative unit SW is in the forward bias state, the conductive surface of the emulator unit is linked to the rest of the circuit, and its impedance is in the second level, meaning it is lower than a second predetermined threshold, thus allowing the transfer of load between the touch-screen of the capacitive touch-screen device and the conductive surface of the capacitive touch screen emulator.

A similar reasoning applies when the command unit COM generates a LOW state signal i.e. a 0. In that case, the impedance of the conductive surface CS is higher than the first predetermined threshold and the third node N3 is floating. Thus, there is negligible transfer of load between the touch screen of the capacitive touch-screen device 2 and the conductive surface CS, as the conductive surface is isolated from the rest of the electric circuit and especially of the ground plane 3 of the capacitive touch screen emulator.

In one embodiment of the invention, the casing has apparent electrical conductive surface that is connected to the ground plane 3. The casing could be a token, smart card, a stylus, a pen etc... When user holds the casing of capacitive Touch Screen emulator, there is a capacitive coupling between the ground plane 3, the earth 4 and the ground of Capacitive Touch screen device 5. If a user has both the capacitive touch screen device and the capacitive touch screen emulator in hand, the body of said user acts as connecting means of the ground plane 3 of the capacitive touch screen emulator to the ground of touch screen device 5. So when the commutative unit SW is in forward bias, there is a coupling between the conductive plate CS of the capacitive touch screen emulator and the ground plane of the capacitive touch screen device allowing the transfer of load.

In case the touch screen emulator shall work with isolated ground plane 3, the intrinsic capacity or antenna effect provided by ground plane 3 shall be sufficient for dissipating electrical charges for ensuring correct working.

Another way to connect the ground plane 3 of the capacitive touch screen emulator to the touch-screen device is to use a contactor between the casing of the touch screen emulator, typically a conductive casing, and the touch-screen device, which has also a conductive casing. The casing in front of device 2 that are outside the area of conductive surface CS should be avoided to be conductive in order to avoid undesirable touch detection outside this conductive surface CS area.

In order to increase the transmission baud rate, a plurality of touch screen emulator could be parallelized. This capacitive touch screen emulator could be integrated in devices of very low dimension.

Figure 2 is another representation of a capacitive touch screen emulator 1 and of a touch detection device 2 such as a capacitive touch screen device. The capacitive touch screen device 2 comprises a capacitive touch screen surface. The capacitive touch screen emulator 1 comprises a conductive plate CS. The conductive plate CS is intended to be in contact or very close to the capacitive touch screen surface of the touch detection device 2 in use.

The conductive surface CS is electrically insulated from the first ground plane 3 of the capacitive touch screen emulator 1. A non-conductive surface is placed between the conductive plate CS and a conductive surface of the first ground plane 3. The conductive surface could be made by a conductive material coated on the non conductive surface.

## Claims

1. A capacitive touch screen emulator comprising a conductive plate, said conductive plate being intended to be in contact or very close to a touch detection device, said conductive plate being connected to a commutative unit comprising at least a diode, said capacitive touch screen emulator comprising a first ground plane, an impedance being connected between the conductive plate and the first ground plane, said impedance varying by means of the commutative unit, said conductive plate being electrically insulated from the first ground plane .

2. The capacitive touch screen emulator according to claim 1, wherein the commutative unit drives two different states of the impedance:
- a first OFF state wherein the impedance is higher than a first predetermined threshold;
- a second ON state wherein the impedance is lower than a second predetermined threshold.

3. The capacitive touch screen emulator according to any one of the previous claims, wherein the commutative unit forms a first branch of an electrical circuit, said first branch comprising a first node and a second node and, said commutative unit having two different states:
- a forward bias state wherein current flows through said first branch; and
- a reverse bias state wherein current is blocked through said first branch
the switching of the impedance between the ON state and the OFF state being driven by the switching of the commutative unit between the forward bias state and the reverse bias state.

4. The capacitive touch screen emulator according to any one of the previous claims, wherein the commutative unit comprises four diodes, two diodes of said four diodes being connected in series between the first node of the first branch and a third node of the first branch of the electrical circuit; the two other diodes of said four diodes being connected in series between the second node and the third node; the third node being connected to the conductive plate.

5. The capacitive touch screen emulator according to any one of the previous claims, wherein a first decoupling capacitor is connected between the first node and the second node and a second decoupling capacitor is connected between the first node and the first ground plane of the capacitive touch screen emulator.

6. The capacitive touch screen emulator according to any one of the previous claims, wherein it comprises a command unit for generating a command signal, said command signal being adapted to drive the switching of the commutative unit between the forward bias state and the reverse bias state.

7. The capacitive touch screen emulator according to claim 6, wherein the command unit comprises a microcontroller, said microcontroller being able to generate at least a data bit stream, each bit of said data bit stream corresponding whether to the forward bias state or to the reverse bias state of the commutative unit.

8. The capacitive touch screen emulator according to one of claim 6 or 7, wherein it comprises a first inverter, the input of said first inverter being connected to the command unit and the output of said first inverter being connected to the first node of the first branch of the electrical circuit.

9. The capacitive touch screen emulator according to claim 8, wherein it comprises a second inverter, the input of the second inverter being connected to the output of the first inverter, the output of the second inverter being connected to the second node of the first branch of the electrical circuit.

10. The capacitive touch screen emulator according to any one of the previous claims, wherein it comprises a limiting current unit in series with the commutative unit for limiting the current flowing through the at least one diode of the commutative unit.

11. A device comprising:
- the capacitive touch screen emulator according to one of the claims 1 to 10; and
- a casing comprising an electrical ground;
the electrical ground of the casing being coupled with a first ground plane of the capacitive touch screen emulator.

12. The device according to claim 11, wherein the casing comprises at least a conductive part, said conductive part being located on an external surface of the casing.

13. The device according to claim 11 or 122, wherein said device comprises connecting means of the first ground plane of the capacitive touch screen emulator to a touch detection device intended to be in touch with the conductive plate of the capacitive touch screen emulator.
